# EUROPÄISCHE PATENTSCHRIFT

(11) **EP 3 370 039 B1**
(45) Veröffentlichungstag und Bekanntmachung des Hinweises auf die Patenterteilung: **04.09.2019**
(21) Anmeldenummer: 18158638.9
(22) Anmeldetag: 26.02.2018
(51) Int. Cl.: G01F 15/00, F15D 1/02

(54) **KRAFTFAHRZEUG-ROHRLEITUNG MIT EINEM MISCHELEMENT AUS EINER DRAHTSTRUKTUR**
MOTOR VEHICLE PIPE WITH A MIXING ELEMENT MADE FROM A WIRE STRUCTURE
CONDUITE DE VÉHICULE AUTOMOBILE POURVUE D'UN ÉLÉMENT DE MÉLANGE EN STRUCTURE PAR FIL

(30) Priorität: 03.03.2017 DE 102017002086
(43) Veröffentlichungstag der Anmeldung: 05.09.2018
(73) Patentinhaber: MAN Truck & Bus SE, 80995 München (DE)
(72) Erfinder: Heindl, Thomas, 81241 München (DE); Tuxhorn, Frank, 80997 München (DE)
(74) Vertreter: v. Bezold & Partner Patentanwälte - PartG mbB

(56) Entgegenhaltungen:
- CN-A- 1 395 082
- JP-A- H08 285 659
- JP-A- 2011 064 278
- JP-B2- 4 578 406
- US-A- 5 918 279
- US-A1- 2010 269 583

## Beschreibung

Die Erfindung betrifft eine Rohrleitung zur Zuführung eines Gases, insbesondere Luft, an einen Verbrennungsmotor, mit einem einen Durchlass für das Gas bildenden Rohrleitungsquerschnitt und einer Gasmesseinrichtung (vorzugsweise Gasmassenmesseinrichtung) zum Messen eines Gasmassenstromes.

US 5,918,279 A offenbart eine Vorrichtung zur Messung der Masse eines strömenden Mediums, mit einem Messelement und einem stromaufwärts des Messelements vorgesehenen Gitter, das eine Vielzahl von Strömungsöffnungen aufweist, wobei die Strömungsöffnungen zumindest bereichsweise einen unterschiedlichen Durchströmquerschnitt aufweisen und die Durchströmquerschnitte der Strömungsöffnungen derart an die Zuströmung zum Gitter angepasst sind, dass stromabwärts des Gitters eine Strömung mit im wesentlichen gleichmässiger Geschwindigkeitsverteilung vorliegt. Ferner kann zum Stand der die US 2010/269583 A1 genannt werden.

Um aktuelle Abgasnormen bei Verbrennungskraftmaschinen (Verbrennungsmotoren) einzuhalten, muss die den Verbrennungsmotoren zugeführte Luftmasse möglichst exakt erfasst werden. Hierzu werden vorwiegend Luftmassenmesser in Rohrleitungen verwendet, die nach dem Hitzdraht- bzw. Heißfilmprinzip arbeiten. Dabei wird die Strömungsgeschwindigkeit der Luft üblicherweise nur punktuell im Rohrleitungsquerschnitt gemessen. Bei seltener verwendeten Ultraschallsensoren erfolgt die Messung meist entlang einer Linie im Rohrleitungsquerschnitt. Da nur in einem sehr geringen Bereich des Rohrleitungsquerschnitts gemessen wird, sind die Messergebnisse stark von dem im Rohrleitungsquerschnitt vorliegenden Strömungsprofil abhängig. Das Strömungsprofil ist aber üblicherweise ungleichmäßig/inhomogen, z. B. verursacht durch Störeinflüsse wie gekrümmte Rohrleitungsabschnitte, Einbautoleranzen, Alterung und Verformung von Bauteilen etc.

Über eine im Motorsteuergerät hinterlegte Kennlinie kann zwar ein kleiner Teil bestimmter Störeinflüsse auf die Strömungsverteilung korrigiert werden (z. B. Rohrverlauf, Querschnittsänderungen vor dem Luftmassenmesser; Aufbau eines Luftfilters etc.). Ein großer Teil bestimmter Störeinflüsse kann jedoch nicht korrigiert werden, z. B. Störeinflüsse, die durch Einbautoleranzen, Alterung und Verformung von Bauteilen, Einflüsse durch die Luftentnahme für die Druckluftversorgung bei Nutzfahrzeugen, Verwendung nicht freigegebener Luftfilter etc. verursacht werden.

Aus der WO 2014/088487 A1 ist bekannt, durch eine gezielte Änderung der Querschnittsgeometrie der Rohrleitung eine Verbesserung bestimmter Störeinflüsse zu erreichen. Um aktuelle Abgasnormen einhalten zu können, sind die hierduch erzielbaren Verbesserungen jedoch nicht ausreichend. Aus dem Stand der Technik, z. B. aus der DE10027831A1, sind ferner Gleichrichtergitter zur Erzielung einer laminaren Luftströmung bekannt. Derartige Gleichrichtergitter dienen also vor allem zur Beseitigung von Wirbeln, so dass eine turbulente in eine laminarere Luftströmung umgewandelt wird, allerdings keine wesentliche Einwirkung auf das Strömungsprofil stattfindet.

Eine Aufgabe der Erfindung ist es, die Genauigkeit der Messung eines Gasmassenstromes in einer Rohrleitung zur Zuführung eines Gases an einen Verbrennungsmotor zu erhöhen.

Diese Aufgabe kann mit den Merkmalen des unabhängigen Anspruchs gelöst werden. Vorteilhafte Weiterbildungen der Erfindung können den Unteransprüchen und der folgenden Beschreibung entnommen werden.

Die Erfindung betrifft eine z. B. im Wesentlichen starre oder flexible Rohrleitung zur Zuführung eines Gases (insbesondere Luft) an einen Verbrennungsmotor vorzugsweise eines Kraftfahrzeugs, insbesondere eines Nutzfahrzeugs (z. B. Omnibus oder Lastkraftwagen).

Die Rohrleitung umfasst einen einen Durchlass für das Gas bildenden Rohrleitungsquerschnitt und eine Gasmesseinrichtung (z. B. Gasmassenmesseinrichtung) zum Messen eines Gasmassenstromes (z. B. ein Gasmassensensor, eine nach dem Hitzdraht- oder Heißfilmprinzip arbeitende Messeinrichtung oder zumindest ein Ultraschallsensor etc.).

Die Gasmesseinrichtung dient zweckmäßig zum Messen des Gasmassenstroms und zwar insbesondere zum Messen der Strömungsgeschwindigkeit des Gasmassenstroms. Die Erfindung zeichnet sich insbesondere dadurch aus, dass die Rohrleitung ein Mischelement aus einer Drahtstruktur stromaufwärts der Gasmesseinrichtung umfasst und das Mischelement zur Beeinflussung, vorzugsweise zur Durchmischung, des Gases dient, um ein stromaufwärts des Mischelements vorhandenes inhomogenes (Gas-) Strömungsprofil zu homogenisieren, also vorzugsweise die Inhomogenität zumindest reduziert oder vorzugsweise im Wesentlichen vollständig eliminiert werden kann.

Dadurch kann zweckmäßig ein inhomogenes Strömungsprofil stromaufwärts des Mischelements in ein zumindest im Wesentlichen homogenes Strömungsprofil umgewandelt werden.

Das Mischelement kann das inhomogene Strömungsprofil vorzugsweise so homogenisieren, dass es in eine z. B. über zumindest den Großteil des Rohrleitungsquerschnitts zweckmäßig im Wesentlichen homogenes Strömungsprofil umgewandelt wird.

Das Mischelement wirkt also insbesondere so, dass Ungleichverteilungen im Strömungsprofil über den Rohrleitungsquerschnitt durch eine (vorzugsweise im Wesentlichen vollständige) Durchmischung des Gasstroms zumindest reduziert werden, so dass nach dem Durchströmen des Gases durch das Mischelement ein möglichst homogenes Strömungsprofil (über den vorzugsweise im Wesentlichen gesamten Rohrleitungsquerschnitt) vorliegt.

Die Erzielung eines möglichst homogenen Strömungsprofils kann insbesondere durch eine gezielt herbeigeführte Verwirbelung des Gases an Drahtabschnitten der Drahtstruktur erreicht werden.

Es ist möglich, dass die Drahtstruktur zumindest ein Drahtgestrick oder zumindest ein Drahtgewebe umfasst.

Zur Ausbildung des Mischelements umfasst die Drahtstruktur ein aufgerolltes Band aus Drahtgestrick oder Drahtgewebe. Somit kann also ein aufgerolltes Band aus Drahtgestrick oder Drahtgewebe zur Ausbildung des Mischelements dienen. Alternativ oder ergänzend umfasst das Drahtgestrick einen Drahtgestrick-Schlauch. Der Drahtgestrick-Schlauch wird zu einem Band flach gedrückt und das Band wird aufgerollt, um so das Mischelement auszubilden.

Das Band kann z. B. einen Gestrick- oder Gewebestreifen umfassen und/oder eine z. B. im Wesentlichen horizontal ausgerichtete und/oder im Wesentlichen ebene Ursprungsform aufweisen.

Es ist möglich, dass auf das Band eine vorzugsweise lineare Prägung aufgebracht ist und die Prägung z. B. relativ zur Rollebene des Bands schräg und/oder nicht senkrecht ausgerichtet ist. Eine z. B. senkrecht zur Rollebene des Bands ausgerichtete Prägung ist nachteilhaft, da beim Aufrollen des Bands Prägeerhöhungen ineinander fallen können.

Die Prägung kann z. B. ein im Wesentlichen Schräg-Muster, V-Muster (insbesondere Pfeil-Muster) oder im Wesentlichen W-Muster ausbilden, insbesondere zur Erhöhung der Stabilität bei z. B. breiten Bändern.

Die Prägung ist vorzugsweise als Prägewellung ausgeführt.

Zur Erzielung einer möglichst gleichmäßigen Durchmischung des Gases kann das Mischelement z. B. eine im Wesentlichen gleichmäßige Dichte und/oder eine im Wesentlichen homogene Struktur aufweisen.

Das Band kann hierzu z. B. im Gegenschlag aufgerollt sein, zweckmäßig so, dass zumindest zwei übereinander angeordnete Lagen des Bands zweckmäßig von einem Bandende aus gemeinsam aufgerollt sind.

Das Band kann im aufgerollten Zustand z. B. einzelne Lagen bilden und es ist z. B. möglich, dass die einzelnen Lagen Prägungen vorzugsweise mit unterschiedlicher und/oder entgegengesetzter Ausrichtung aufweisen.

Bei einem Aufrollen des Bands im Gegenschlag wird das Band zuerst auf vorzugsweise ungefähr halber Länge zumindest einmal zurückgeschlagen und daraufhin die zumindest zwei Lagen gemeinsam aufgerollt. Somit können Prägeerhöhungen einzelner aufgerollter Lagen des Bands eine unterschiedliche, insbesondere entgegengesetzte, Ausrichtung aufweisen und somit zweckmäßig nicht mehr ineinander fallen, wodurch vorzugsweise ein Mischelement mit im Wesentlichen gleichmäßiger Dichte und/oder einer im Wesentlichen homogenen Struktur ausgebildet werden kann.

Bei einem Aufrollen des Bands im Gleichschlag wird das Band in nur einer Lage von einem Bandende aus aufgerollt, so dass Prägeerhöhungen einzelner aufgerollter Lagen des Bands die gleiche Ausrichtung aufweisen und dadurch ineinander fallen können.

Es ist möglich, dass im aufgerollten Zustand des Bands zwei offene Enden des Bands an Außenseiten des Bands angeordnet sind, z. B. um 180° +/-40°, +/-30° oder +/-20° versetzt zueinander, so dass z. B. das Mischelement einen im Wesentlichen symmetrischen Randbereich aufweist.

Es ist allerdings auch möglich, dass im aufgerollten Zustand des Bands zwei offene Enden des Bands (vorzugsweise im Wesentlichen zentral) innerhalb des Bands angeordnet sind, so dass z. B. das Mischelement einen unsymmetrischen Randbereich aufweist.

Das Mischelement und somit insbesondere die Drahtstruktur kann den im Wesentlichen gesamten Rohrleitungsquerschnitt ausfüllen.

Es ist möglich, dass das Mischelement als Verwirbelungseinrichtung wirkt, so dass Verwirbelungen des Gases an Drahtabschnitten der Drahtstruktur für die Durchmischung des Gases und die Homogenisierung des inhomogenen Strömungsprofils sorgen.

Eine Gasströmung am Austritt des Mischelements kann somit z. B. eine Vielzahl an vorzugsweise kleinen Wirbeln aufweisen. Alternativ oder ergänzend kann eine Gasströmung am Austritt des Mischelements stärker verwirbelt sein als am Eintritt des Mischelements. Trotz oder gerade eben wegen der Verwirbelungen kann ein homogenes Strömungsprofil ermöglicht werden.

Es ist möglich, dass zum Abklingen (insbesondere Reduzieren) der Wirbel stromabwärts des Mischelements eine im Wesentlichen lineare (zweckmäßig gerade) Beruhigungsstrecke für das Gas und/oder zumindest eine Gleichrichtereinrichtung (z. B. ein Gleichrichtergitter) zur Reduzierung der Wirbel und somit zur Erzielung einer im Wesentlichen laminaren Gasströmung ausgebildet ist.

Eine Gleichrichtereinrichtung zur Reduzierung der Wirbel kann z .B. im oder unmittelbar vor einem Gaseintritt (z. B. Gaseinlass eines Messrohrs) der Gasmesseinrichtung angeordnet sein.

Es ist möglich, dass Drahtabschnitte des Drahtgestricks in Wirrlage und/oder hintereinander zweckmäßig in einem beliebigen Winkel kreuzend angeordnet sind, so dass vorzugsweise das Gas während der Durchströmung des Mischelements mehrfach umgelenkt wird. Die Umlenkung kann in vorzugsweise allen drei Raumrichtungen erfolgen.

Es ist möglich, dass Drahtabschnitte zumindest zweier Drahtgewebelagen hintereinander zweckmäßig in einem beliebigen Winkel kreuzend angeordnet sind, so dass vorzugsweise das Gas während der Durchströmung des Mischelements mehrfach umgelenkt wird. Die Umlenkung kann in vorzugsweise allen drei Raumrichtungen erfolgen.

Die Rohrleitung kann stromaufwärts des Mischelements zumindest eine Störbeaufschlagung aufweisen, wobei die Störbeaufschlagung dazu führt, dass das Gas stromaufwärts des Mischelements ein über den Rohrleitungsquerschnitt inhomogenes/ungleichmäßiges Strömungsprofil aufweist. Alternativ oder ergänzend kann die Rohrleitung stromaufwärts des Mischelements gekrümmt sein und die Krümmung kann dazu führen, dass das Gas stromaufwärts des Mischelements ein über den Rohrleitungsquerschnitt inhomogene/ungleichmäßige Strömungsprofil aufweist.

Das Mischelement, die Beruhigungsstrecke und/oder zumindest eine Gleichrichtereinrichtung ist vorzugsweise stromaufwärts der Gasmesseinrichtung in der Rohrleitung angeordnet.

Stromaufwärts des Mischelements kann z. B. ein Gasfilter zum Filtern des Gases angeordnet sein.

Die Drahtstruktur ist vorzugsweise aus einem Metallmaterial, insbesondere Edelstahl, ausgebildet. Die Drahtstruktur kann im Rahmen der Erfindung aber auch z. B. aus einem Kunststoffmaterial ausgebildet sein.

Das Drahtgestrick ist zumindest abschnittsweise aus vorzugsweise einem einzigen Draht, insbesondere Metall- und/oder Kunststoffdraht, gestrickt.

Das Gas ist wie bereits erwähnt vorzugsweise Luft.

Die Gasmesseinrichtung ist somit vorzugsweise eine Luftmesseinrichtung.

Die Gasmesseinrichtung dient vorzugsweise zum Messen der (Gas-) Strömungsgeschwindigkeit.

Im Kontext der Erfindung umfasst das Merkmal "homogenisieren" und/oder "homogen" vorzugsweise Ausführungsformen, bei denen eine Inhomogenität im Wesentlichen vollständig eliminiert wird, aber auch vorzugsweise Ausführungsformen, bei denen eine Inhomogenität nur zweckmäßig wesentlich reduziert wird. Das Merkmal "homogenisieren" und/oder "homogen" ist somit vorzugsweise nicht auf eine vollständige Homogenisierung eines inhomogenen Strömungsprofils eingeschränkt. Auch z. B. ein um die Rohrmittelachse im Wesentlichen rotationssymmetrisches Strömungsprofil kann zweckmäßig im Kontext der Erfindung durch das Merkmal "homogen" und/oder "homogenisieren" umfasst sein.

Die Erfindung umfasst auch ein Kraftfahrzeug, vorzugsweise ein Nutzfahrzeug (z. B. Omnibus oder Lastkraftwagen) mit einer Rohrleitung nach einem der vorhergehenden Ansprüche.

Die oben beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Ansicht einer Rohrleitung gemäß einer Ausführungsform der Erfindung,
- Figur 2: zeigt einen Ausschnitt eines Mischelements aus Drahtgestrick gemäß einer Ausführungsform der Erfindung,
- Figur 3: zeigt einen Ausschnitt eines Drahtgewebes zur Ausbildung eines Mischelements gemäß einer Ausführungsform der Erfindung,
- Figur 4: zeigt einen Ausschnitt eines Drahtgestricks zur Ausbildung eines Mischelements gemäß einer Ausführungsform der Erfindung,
- Figur 5: zeigt Ansichten eines Bands zur Ausbildung eines Mischelements gemäß einer Ausführungsform der Erfindung,
- Figur 6: zeigt eine Ansicht eines aufgerollten Bands zur Ausbildung eines Mischelements gemäß einer Ausführungsform der Erfindung,
- Figur 7: zeigt eine Ansicht eines aufgerollten Bands zur Ausbildung eines Mischelements gemäß einer anderen Ausführungsform der Erfindung,
- Figur 8: zeigt schematisch die Wirkweise eines Mischelements gemäß einer Ausführungsform der Erfindung,
- Figur 9: illustriert ein Verfahren zur Herstellung einer Prägung für ein Mischelement gemäß einer Ausführungsform der Erfindung,
- Figur 10: zeigt unterschiedliche Ansichten einer Schrägprägung für ein Mischelement gemäß einer Ausführungsform der Erfindung,
- Figur 11: zeigt unterschiedliche Ansichten einer V-Prägung für ein Mischelement gemäß einer Ausführungsform der Erfindung, und
- Figur 12: zeigt unterschiedliche Ansichten einer W-Prägung für ein Mischelement gemäß einer Ausführungsform der Erfindung.

Die in den Figuren gezeigten Ausführungsformen stimmen teilweise überein, so dass identische oder ähnliche Teile mit den gleichen Bezugszeichen versehen sind, wobei zu deren Erläuterung auch auf die Beschreibung der anderen Ausführungsformen verwiesen wird, um Wiederholungen zu vermeiden.

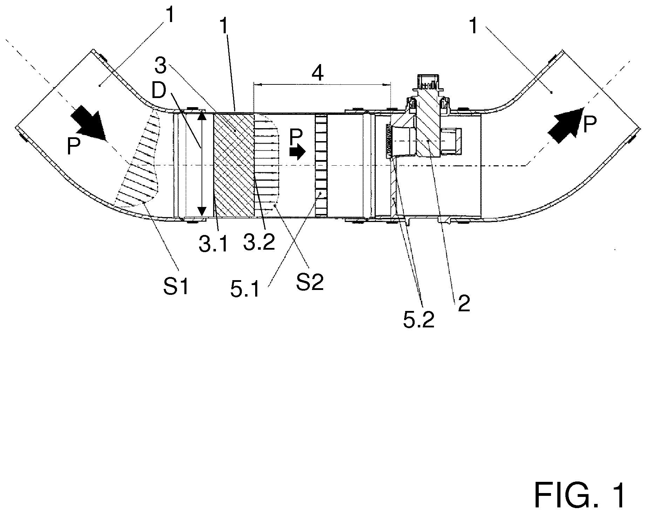

Figur 1 zeigt eine Ansicht einer Rohrleitung 1 zur Zuführung eines Gases in Form von Luft an einen nicht gezeigten Verbrennungsmotor gemäß einer Ausführungsform der Erfindung. Die Pfeile P kennzeichnen die Strömungsrichtung des Gases durch die Rohrleitung 1. Der in Figur 1 linke Teil der Rohrleitung 1 bildet ein Reinluftrohr von einem nicht gezeigten Gasfilter, wobei der in Figur 1 rechte Teil der Rohrleitung 1 ein Reinluftrohr zum Verbrennungsmotor bildet.

Die Rohrleitung 1 umfasst einen Durchlass für das Gas bildenden Rohrleitungsquerschnitt D und eine Gasmesseinrichtung 2 zum Messen eines Gasmassenstromes. Die Gasmesseinrichtung 2 arbeitet vorzugsweise nach dem Heißfilm- oder Heizdraht-Prinzip oder aber mit zumindest einem Ultraschallsensor. Auch andere im Stand der Technik bekannte Messeinrichtungen können verwendet werden. Die Gasmesseinrichtung 2 misst die Strömungsgeschwindigkeit zweckmäßig nur punktuell, so dass für eine genaue Messung ein über den Rohrleitungsquerschnitt D möglichst homogenes Strömungsprofil vorteilhaft ist.

Bezugszeichen S1 kennzeichnet ein Strömungsprofil stromaufwärts eines weiter unten näher beschriebenen Mischelements 3. Figur 1 zeigt, dass das Strömungsprofil S1 inhomogen und somit ungleichmäßig ist, insbesondere verursacht durch die Krümmung im in Figur 1 linken Teil der Rohrleitung 1. Auch andere Störbeaufschlagungen können zu einem inhomogenen Strömungsprofil S1 führen, z. B. Einbautoleranzen, Alterung und Verformung von Bauteilen, Einflüsse durch Luftentnahme für die Druckluftversorgung bei Nutzfahrzeugen, Verwendung nicht freigegebener Luftfilter etc. Eine Messung der Masse bzw. der Strömungsgeschwindigkeit in einem inhomogenen Strömungsprofil S1 würde zu einem ungenauen Ergebnis führen.

In die Rohrleitung 1 ist deshalb stromaufwärts der Gasmesseinrichtung 2 ein Mischelement 3 mit einem Eintritt 3.1 und einem Austritt 3.2 für das Gas eingebaut. Das Mischelement 3 ist aus einer metallischen oder kunststoffartigen Drahtstruktur ausgebildet und dient zur Durchmischung des Gases, um das stromaufwärts des Mischelements 3 vorhandene inhomogene Strömungsprofil S1 zu homogenisieren, so dass dessen Inhomogenität zumindest reduziert, vorzugsweise im Wesentlichen eliminiert wird. Das Mischelement 3 wirkt dabei so, dass das inhomogene Strömungsprofil S1 in ein über den Rohrleitungsquerschnitt D im Wesentlichen homogenes Strömungsprofil S2 umgewandelt wird.

Das Mischelement 3 füllt den gesamten Rohrleitungsquerschnitt D aus und fungiert insbesondere als Verwirbelungseinrichtung, so dass die Durchmischung des Gases und somit die Homogenisierung durch Verwirbelung des Gases an Drahtabschnitten der Drahtstruktur erfolgt. Die Gasströmung am Austritt 3.2 des Mischelements 3 weist somit eine Vielzahl an relativ kleinen Wirbeln auf. Es sind sogar Ausführungsformen möglich, bei denen die Gasströmung am Austritt 3.2 des Mischelements 3 stärker verwirbelt ist als am Eintritt 3.1 des Mischelements 3.

Zum Abklingen der Wirbel stromabwärts des Mischelements 3 umfasst die Rohrleitung 1 eine im Wesentlichen lineare Beruhigungsstrecke 4, innerhalb derer die Wirbel abklingen können. Außerdem umfasst die Rohrleitung 1 zwei optionale Gleichrichtergitter 5.1 und 5.2, die ebenfalls zur Reduzierung der Wirbel stromabwärts des Mischelements 3 dienen. Das Gleichrichtergitter 5.2 ist zweckmäßig im oder unmittelbar vor einem Gaseintritt der Gasmesseinrichtung 2 angeordnet, vorzugsweise in oder unmittelbar vor dessen Messrohr.

Ziel des Mischelements 3 ist es also, Ungleichverteilungen im Strömungsprofil über den Rohrleitungsquerschnitt D durch eine (z. B. im Wesentlichen vollständige) Durchmischung des Gasstroms zu eliminieren, sodass nach dem Durchströmen des Mischelements 3 ein möglichst homogenes Strömungsprofil S2 über den vorzugsweise im Wesentlichen gesamten Rohrleitungsquerschnitt D vorliegt. Dies kann insbesondere durch eine gezielt herbeigeführte Verwirbelung des Gases an Drahtabschnitten der Drahtstruktur erreicht werden.

Das Mischelement 3 dient folglich insbesondere zur Homogenisierung eines inhomogenen Strömungsprofils und - im Gegensatz zu aus dem Stand der Technik üblichen Wirbelunterdrückungsvorrichtungen - vorzugsweise nicht dazu, eine turbulente Gasströmung in eine laminarere Gasströmung umzuwandeln.

Um eine möglichst gleichmäßige Durchmischung des Gases und somit ein möglichst homogenes Strömungsprofil S2 zu ermöglichen, ist das Mischelement 3 mit einer im Wesentlichen gleichmäßigen Dichte und einer im Wesentlichen homogenen Struktur ausgeführt.

Das Mischelement 3 ist stromaufwärts der Beruhigungsstrecke 4 und der zwei optionalen Gleichrichtergitter 5.1 und 5.2 in der Rohrleitung 1 angeordnet. Das Mischelement 3, die Beruhigungsstrecke 4 und die zwei optionalen Gleichrichtergitter 5.1 und 5.2 sind stromaufwärts der Gasmesseinrichtung 2 in der Rohrleitung 1 angeordnet.

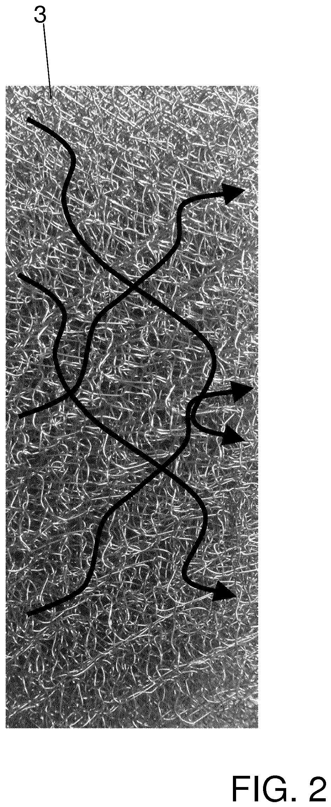

Figur 2 zeigt einen Ausschnitt eines Mischelements 3 aus Drahtgestrick gemäß einer Ausführungsform der Erfindung.

Aus Figur 2 wird ersichtlich, dass Drahtabschnitte des Drahtgestricks in Wirrlage und hintereinander kreuzend angeordnet sind, so dass das Gas während der Durchströmung des Mischelements 3 mehrfach, vorzugsweise in allen drei Raumrichtungen, umgelenkt und somit effektiv verwirbelt und/oder durchmischt werden kann, was in Figur 2 schematisch durch die Pfeile innerhalb des Mischelements 3 angedeutet ist.

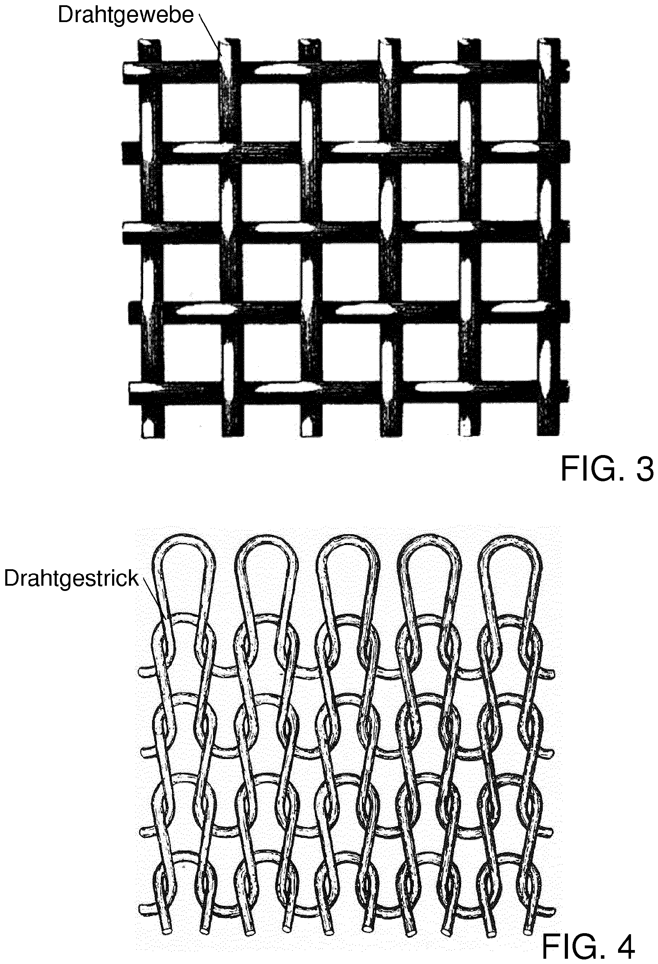

Figur 3 zeigt einen Ausschnitt eines Drahtgewebes zur Ausbildung eines Mischelements 3 gemäß einer Ausführungsform der Erfindung.

Zumindest zwei derartige Drahtgewebe können z. B. hintereinander angeordnet werden, so dass deren Drahtabschnitte sich kreuzen, wodurch das Gas während der Durchströmung des Mischelements 3 mehrfach umgelenkt und somit effektiv verwirbelt und/oder durchmischt und homogenisiert werden kann.

Figur 4 zeigt einen Ausschnitt eines Drahtgestricks zur Ausbildung eines Mischelements 3 gemäß einer Ausführungsform der Erfindung. Das Drahtgestrick ist zumindest abschnittsweise aus einem einzigen (Metall- oder Kunststoff-) Draht gestrickt.

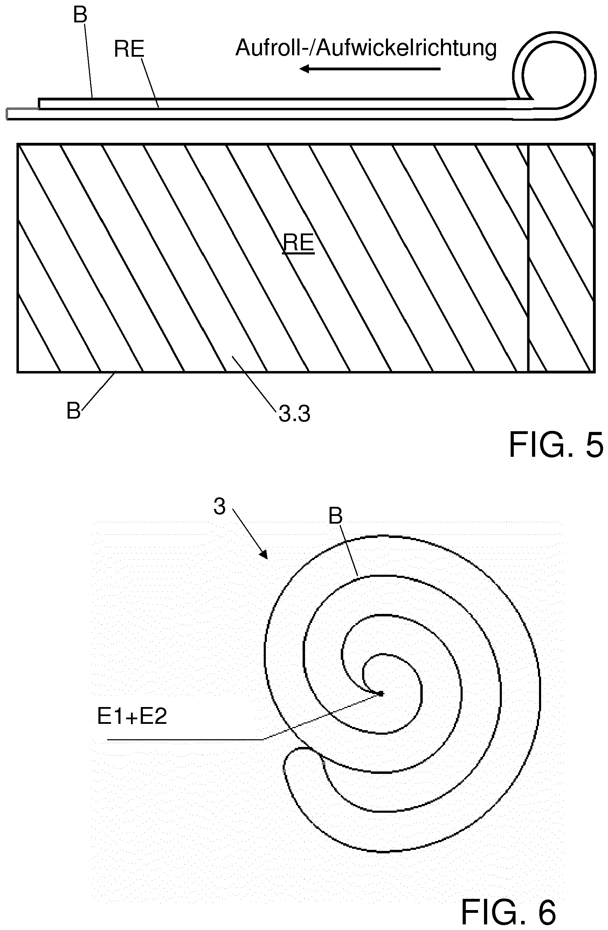

Figur 5 zeigt Ansichten eines Bands B zur Ausbildung eines Mischelements 3 gemäß einer Ausführungsform der Erfindung, wobei in Figur 5 oben eine Seitenansicht und in Figur 5 unten eine zugehörige Draufsicht des Bands B dargestellt ist. Das Band B kann zweckmäßig aus Drahtgewebe, wie z. B. in Figur 3 gezeigt, oder aus Drahtgestrick, wie z. B. in Figur 4 gezeigt, ausgebildet sein.

Das Mischelement 3 kann insbesondere durch Aufrollen (Aufwickeln) des Bands B hergestellt werden.

Auf das Band B ist eine Prägung 3.3 aufgebracht, die relativ zur Rollebene RE des Bands B schräg und/oder nicht senkrecht ausgerichtet ist. Die Prägung 3.3 sollte nicht senkrecht zur Rollebene RE ausgerichtet sein, weil ansonsten beim Aufrollen des Bands B Prägeerhöhungen nachteilig ineinander fallen können.

Figur 5 illustriert ein Aufrollen des Bands B im Gegenschlag, so dass zumindest zwei übereinander gelegte Lagen des Bands B gemeinsam aufgerollt werden. Bei der Ausbildung des Mischelements 3 im Gegenschlag wird das Band B insbesondere auf zweckmäßig ungefähr halber Länge zurückgeschlagen, wobei die daraus resultierenden Lagen dann gemeinsam aufgerollt werden.

Im aufgerollten Zustand weist das Band B und somit das Mischelement 3 einzelne Lagen auf, wobei die einzelnen Lagen Prägungen 3.3 mit unterschiedlicher, insbesondere entgegengesetzter Ausrichtung aufweisen können. Dadurch können Prägeerhöhungen nicht mehr ineinander fallen, was zu einer im Wesentlichen gleichmäßigen Dichte und einer im Wesentlichen homogenen Struktur des Mischelements 3 beiträgt.

Für eine erhöhte Stabilität bei insbesondere relativ breiten Bändern B kann die Prägung 3.3 auch andere Muster aufweisen, z. B. im Wesentlichen V-förmig (insbesondere Pfeil-förmig) oder W-förmig ausgeführt sein.

Bei einem Aufwickeln im Gleichschlag wird das Band B hingegen einlagig von einem Ende her aufgerollt. Prägungen 3.3 einzelner Lagen weisen dann die gleiche Ausrichtung auf. Prägeerhöhungen können somit nachteilig ineinander fallen.

Ein Mischelement 3 aus Drahtgestrick kann insbesondere wie folgt ausgebildet werden: Das Drahtgestrick wird in Form eines Drahtgestrick-Schlauchs zur Verfügung gestellt. Der Drahtgestrick-Schlauch wird zunächst zu einem Band B flach gedrückt und geprägt, woraufhin das Band B z. B. nach dem in Figur 5 gezeigten Prinzip zur Ausbildung des Mischelements 3 aufgerollt werden kann.

Figur 6 zeigt eine Ansicht eines aufgerollten Bands B zur Ausbildung eines Mischelements 3 gemäß einer Ausführungsform der Erfindung.

Bei der in Figur 6 gezeigten Ausführungsform sind zwei offene Enden E1 und E2 des Bands B im Wesentlichen zentral innerhalb des aufgerollten Bands B angeordnet, so dass das Mischelement 3 einen unsymmetrischen Randbereich aufweist. Obwohl das Mischelement 3 für ein im Wesentlichen homogenes Strömungsprofil über einen Großteil des Rohrleitungsquerschnitts D sorgt, kann im Randbereich des Mischelements 3 und somit im Randbereich des Rohrleitungsquerschnitts D ein inhomogenes Strömungsprofil vorliegen.

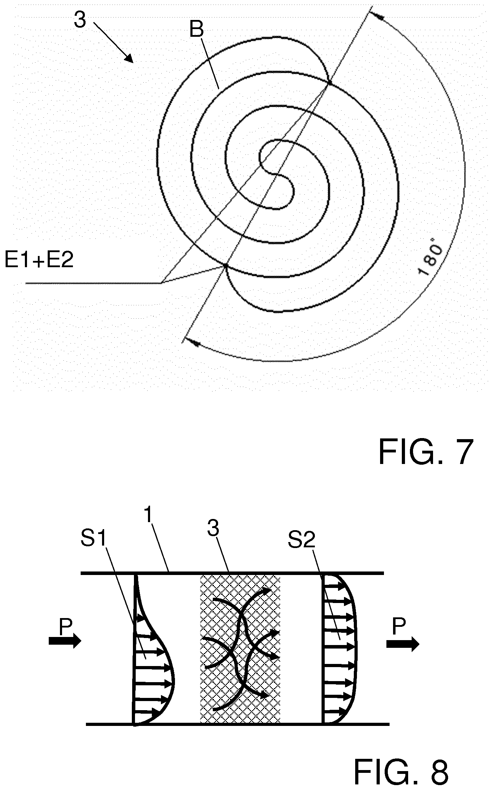

Figur 7 zeigt eine Ansicht eines aufgerollten Bands B zur Ausbildung eines Mischelements 3 gemäß einer Ausführungsform der Erfindung.

Bei der in Figur 7 gezeigten Ausführungsform sind zwei offene Enden E1 und E2 des Bands B an Außenseiten des aufgerollten Bands B angeordnet und zwar um im Wesentlichen 180° versetzt zueinander, so dass das Mischelement 3 einen symmetrischen Randbereich aufweist, was zu einer Erhöhung der Homogenität des Strömungsprofils über den Rohrleitungsquerschnitt D beiträgt.

Figur 8 illustriert schematisch das Wirkprinzip eines Mischelements 3 gemäß einer Ausführungsform der Erfindung.

Figur 8 veranschaulicht, dass das Mischelement 3 zur Durchmischung des Gases dient, so dass ein inhomogenes Strömungsprofil S1 stromaufwärts des Mischelements 3 in ein zumindest großteils homogenes Strömungsprofil S2 umgewandelt wird. Zu diesem Zweck ist das Mischelement 3 vorzugsweise als Verwirbelungseinrichtung ausgeführt, so dass die Durchmischung des Gases und die Homogenisierung mittels einer Verwirbelung des Gases an Drahtabschnitten der Drahtstruktur erfolgt. Insbesondere wird das Gas innerhalb des Mischelements 3 in allen drei Raumrichtungen umgelenkt, was zu einer effektiven Homogenisierung des Strömungsprofils beiträgt.

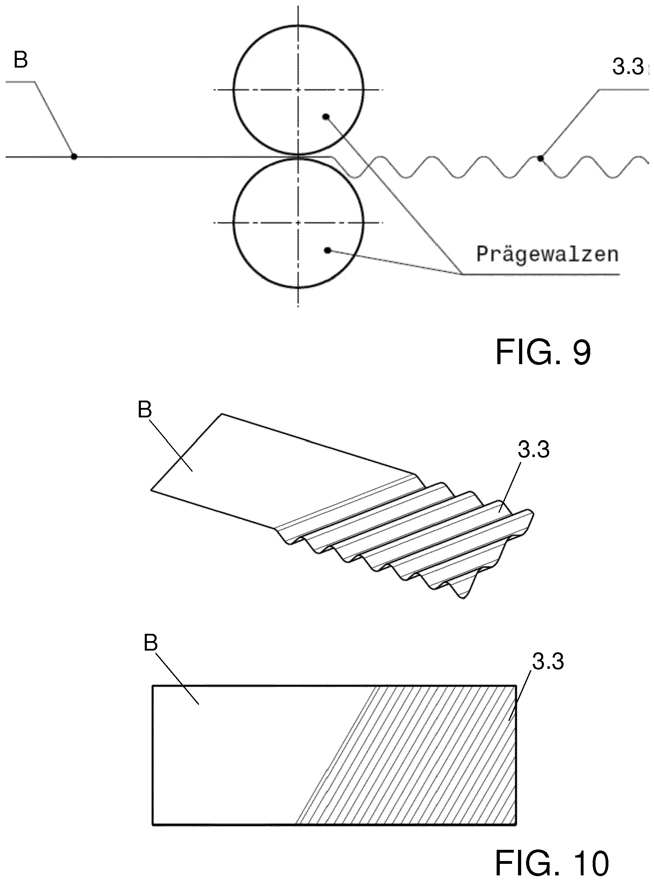

Figur 9 illustriert ein Verfahren zur Herstellung einer Prägung 3.3 auf ein Band B für ein Mischelement 3 gemäß einer Ausführungsform der Erfindung. Das Band B wird zur Herstellung der Prägung 3.3 durch zwei Prägewalzen befördert.

Die Drahtstruktur, also insbesondere das Gestrick, wird zumeist im Rundstrickverfahren als Schlauch erzeugt. Der Schlauch wird beim Austritt aus der Strickmaschine zu einem Band B flach gedrückt. Wird alternativ ein Flachstrickverfahren verwendet, entfällt dieser Schritt und das Gestrick liegt sofort als flaches Band B vor. Dieses Band B läuft nun durch zwei Prägewalzen, auf deren Oberflächen eine Prägestruktur aufgebracht ist, z. B. eine schräge, V- oder W-förmige Wellenstruktur. Dem Band B wird dadurch z. B. eine schräge, V- oder W-förmige Prägung 3.3 (Wellung) eingeprägt. Durch den Abstand der Prägewalzen zueinander kann die Tiefe der Prägung 3.3 eingestellt werden.

Figur 10 zeigt oben eine perspektivische Ansicht und unten eine Draufsicht auf ein Band B für ein Mischelement 3, wobei das Band B eine Schräg-Prägung 3.3 aufweist.

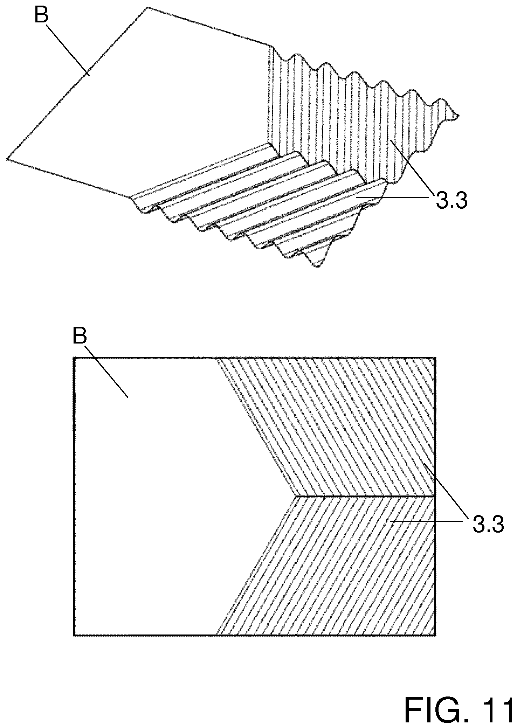

Figur 11 zeigt oben eine perspektivische Ansicht und unten eine Draufsicht auf ein Band B für ein Mischelement 3, wobei das Band B eine V-Prägung 3.3 aufweist.

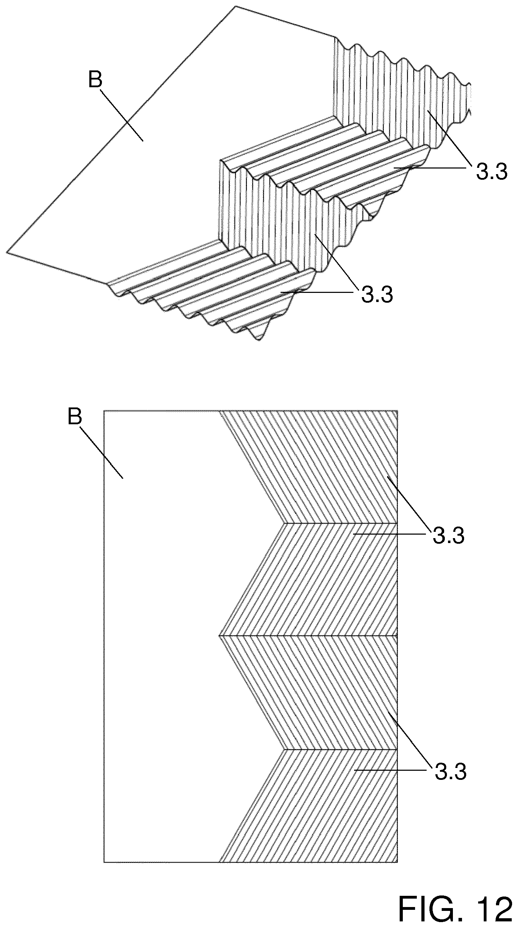

Figur 12 zeigt oben eine perspektivische Ansicht und unten eine Draufsicht auf ein Band B für ein Mischelement 3, wobei das Band B eine W-Prägung 3.3 aufweist. Eine W-Prägung 3.3 umfasst somit vorzugsweise zumindest zwei V-Prägungen.

Durch die Erfindung kann insbesondere eine quasi ideale homogene Strömungsverteilung vor der Gasmesseinrichtung erzielt werden. Durch die Homogenisierung hervorgerufene Wirbel können durch die Anordnung bis zur Gasmesseinrichtung weitestgehend beseitigt werden. Hierdurch ist eine hochgenaue Erfassung der Gasmasse im Wesentlichen ohne störende Einflüsse möglich.

Der durch das Mischelement verursachte Druckverlust ist im Vergleich zum Druckverlust der gesamten Ansauganlage relativ gering.

Durch die einfache Integration des Mischelements in die Rohrleitung können bereits vorhandene Ausführungen von Ansauganlagen leicht um eine Gasmassenmesseinrichtung erweitert werden.

Die Eigenschaften des Mischelements werden vor allem bestimmt durch die geometrischen Abmessungen, Drahtstärke, Drahtdichte, Wicklungsart, Maschenanzahl des Gestricks oder Rastermaß des Gewebes, Prägeart und Prägetiefe, sowie Länge des Mischelements. Über einen oder mehrere dieser Parameter können Druckverlust und Stärke der Durchmischung dem Gasmassenstrom angepasst werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen.

### Bezugszeichenliste

- 1: Rohrleitung
- 2: Gasmesseinrichtung, insbesondere Luftmesseinrichtung
- 3: Mischelement
- 3.1: Eintritt
- 3.2: Austritt
- 3.3: Prägung
- D: Rohrleitungsquerschnitt
- B: Band zur Ausbildung des Mischelements
- E1: Offenes Ende des Bands
- E2: Offenes Ende des Bands
- RE: Rollebene
- 4: Beruhigungsstrecke
- 5.1: Gleichrichtereinrichtung zur Wirbelreduzierung
- 5.2: Gleichrichtereinrichtung zur Wirbelreduzierung
- S1: Inhomogene Gasmassenverteilung
- S2: Homogene Gasmassenverteilung
- P: Strömungsrichtung des Gases

## Patentansprüche

1. Rohrleitung (1) zur Zuführung eines Gases an einen Verbrennungsmotor, mit einem einen Durchlass für das Gas bildenden Rohrleitungsquerschnitt (D) und einer Gasmesseinrichtung (2) zum Messen eines Gasmassenstromes, wobei die Rohrleitung (1) ein Mischelement (3) aus einer Drahtstruktur stromaufwärts der Gasmesseinrichtung (2) umfasst und das Mischelement (3), zur Beeinflussung, vorzugsweise zur Durchmischung, des Gases dient, um ein stromaufwärts des Mischelements (3) vorhandenes inhomogenes Strömungsprofil (S1) zu homogenisieren, **dadurch gekennzeichnet, dass** zur Ausbildung des Mischelements (3) die Drahtstruktur ein aufgerolltes Band (B) aus Drahtgestrick oder Drahtgewebe umfasst und/oder ein Drahtgestrick-Schlauch zu einem Band (B) flach gedrückt ist und das Band (B) aufgerollt ist, um das Mischelement (3) auszubilden.

2. Rohrleitung (1) nach Anspruch 1, **dadurch gekennzeichnet, dass** das Mischelement (3) das inhomogene Strömungsprofil (S1) so homogenisiert, dass es in ein über den Rohrleitungsquerschnitt (D) im Wesentlichen homogenes Strömungsprofil (S2) umgewandelt wird.

3. Rohrleitung (1) nach Anspruch 1 oder 2, **dadurch gekennzeichnet, dass** die Drahtstruktur zumindest ein Drahtgestrick oder zumindest ein Drahtgewebe umfasst.

4. Rohrleitung (1) nach einem der vorhergehenden Ansprüche, **dadurch gekennzeichnet, dass** auf das Band (B) eine Prägung (3.3) aufgebracht ist und vorzugsweise die Prägung (3.3) relativ zur Rollebene (RE) des Bands (B) schräg und/oder nicht senkrecht ausgerichtet ist.

5. Rohrleitung (1) nach Anspruch 4, **dadurch gekennzeichnet, dass** die Prägung (3.3) als Prägewellung ausgebildet ist und/oder ein Schräg-, V- oder W-Muster ausbildet.

6. Rohrleitung (1) nach einem der vorhergehenden Ansprüche, **dadurch gekennzeichnet, dass** das Mischelement (3) eine gleichmäßige Dichte und/oder eine homogene Struktur aufweist.

7. Rohrleitung (1) nach einem der vorhergehenden Ansprüche, **dadurch gekennzeichnet, dass** das Band (B) im Gegenschlag aufgerollt ist, vorzugsweise so, dass zumindest zwei übereinander angeordnete Lagen des Bands (B) gemeinsam aufgerollt sind.

8. Rohrleitung (1) nach einem der vorhergehenden Ansprüche, **dadurch gekennzeichnet, dass** das Band (B) im aufgerollten Zustand einzelne Lagen bildet und die einzelnen Lagen unterschiedlich und/oder entgegengesetzt ausgerichtete Prägungen (3.3) aufweisen.

9. Rohrleitung (1) nach einem der vorhergehenden Ansprüche, **dadurch gekennzeichnet, dass** im aufgerollten Zustand des Bands (B)
- zwei offene Enden (E1, E2) des Bands (B) an Außenseiten des Bands (B) angeordnet sind, vorzugsweise um 180° +/-40°, +/-30° oder +/-20° versetzt zueinander, oder
- zwei offene Enden (E1, E2) des Bands (B) vorzugsweise zentral innerhalb des Bands (B) angeordnet sind.

10. Rohrleitung (1) nach einem der vorhergehenden Ansprüche, **dadurch gekennzeichnet, dass** das Mischelement (3) den gesamten Rohrleitungsquerschnitt (D) ausfüllt.

11. Rohrleitung (1) nach einem der vorhergehenden Ansprüche, **dadurch gekennzeichnet, dass** das Mischelement (3) als Verwirbelungseinrichtung wirkt, so dass Verwirbelungen des Gases an Drahtabschnitten der Drahtstruktur für die Durchmischung des Gases und die Homogenisierung des inhomogenen Strömungsprofils (S1) sorgen.

12. Rohrleitung (1) nach einem der vorhergehenden Ansprüche, **dadurch gekennzeichnet, dass** eine Gasströmung am Austritt (3.2) des Mischelements (3) eine Vielzahl an Wirbeln aufweist und/oder eine Gasströmung am Austritt (3.2) des Mischelements (3) stärker verwirbelt ist als am Eintritt (3.1) des Mischelements (3) und zum Abklingen der durch das Mischelement (3) erzeugten Wirbel stromabwärts des Mischelements (3) eine lineare Beruhigungsstrecke (4) und/oder zumindest eine Gleichrichtereinrichtung (5.1, 5.2) zur Reduzierung der Wirbel ausgebildet ist.

13. Rohrleitung (1) nach einem der vorhergehenden Ansprüche, **dadurch gekennzeichnet, dass** eine Gleichrichtereinrichtung (5.2) zur Reduzierung von Wirbeln im oder unmittelbar vor einem Gaseintritt der Gasmesseinrichtung (2) angeordnet ist.

14. Rohrleitung (1) nach einem der vorhergehenden Ansprüche, **dadurch gekennzeichnet, dass**
- Drahtabschnitte des Drahtgestricks in Wirrlage und/oder hintereinander kreuzend angeordnet sind, so dass vorzugsweise das Gas während der Durchströmung des Mischelements (3) mehrfach umgelenkt wird, oder
- Drahtabschnitte zumindest zweier Drahtgewebelagen hintereinander kreuzend angeordnet sind, so dass vorzugsweise das Gas während der Durchströmung des Mischelements (3) mehrfach umgelenkt wird.

15. Rohrleitung (1) nach einem der vorhergehenden Ansprüche, **dadurch gekennzeichnet, dass** die Rohrleitung (1) stromaufwärts des Mischelements (3)
- eine Störbeaufschlagung aufweist und die Störbeaufschlagung dazu führt, dass das Gas stromaufwärts des Mischelements (3) ein über den Rohrleitungsquerschnitt (D) inhomogenes Strömungsprofil (S1) aufweist, oder
- gekrümmt ist, so dass das Gas stromaufwärts des Mischelements (3) ein über den Rohrleitungsquerschnitt (D) inhomogenes Strömungsprofil (S1) aufweist.

16. Rohrleitung (1) nach einem der vorhergehenden Ansprüche, **dadurch gekennzeichnet, dass** das Mischelement (3), die Beruhigungsstrecke (4) und/oder zumindest eine Gleichrichtereinrichtung (5.1, 5.2) stromaufwärts der Gasmesseinrichtung (4) in der Rohrleitung (1) angeordnet ist.

17. Rohrleitung (1) nach einem der vorhergehenden Ansprüche, **dadurch gekennzeichnet, dass**
- die Drahtstruktur aus einem Metall- oder Kunststoffmaterial, insbesondere Edelstahl, ausgebildet ist, und/oder
- das Drahtgestrick zumindest abschnittsweise aus einem einzigen Draht gestrickt ist.

18. Kraftfahrzeug, vorzugsweise Nutzfahrzeug, mit einer Rohrleitung (1) nach einem der vorhergehenden Ansprüche.

## Claims

1. A pipeline (1) for supplying a gas to an internal combustion engine, with a pipeline cross section (D) forming a passage for the gas and a gas measuring device (2) for measuring a gas mass flow, wherein the pipeline (1) comprises a mixing element (3) made from a wire structure upstream from the gas measuring device (2) and in that the mixing element (3) serves for influencing, preferably for the thorough mixing of, the gas in order to homogenize an inhomogeneous flow profile (S1) which is present upstream from the mixing element (3), **characterized in that** the wire structure comprises a rolled-up band (B) of wire mesh or wire weave to form the mixing element (3) and/or a wire mesh tube is pressed flat into a band (B) and the band (B) is rolled up to form the mixing element (3).

2. The pipeline (1) according to Claim 1, **characterized in that** the mixing element (3) homogenizes the inhomogeneous flow profile (S1) such that it is transformed into a flow profile (S2) which is substantially homogeneous over the pipeline cross section (D).

3. The pipeline (1) according to Claim 1 or 2, **characterized in that** the wire structure comprises at least one wire mesh or at least one wire weave.

4. The pipeline (1) according to one of the preceding claims, **characterized in that** an embossing (3.3) is applied to the band (B) and preferably the embossing (3.3) is oriented slanting and/or not perpendicular relative to the rolling plane (RE) of the band (B).

5. The pipeline (1) according to Claim 4, **characterized in that** the embossing (3.3) is formed as an embossed corrugation and/or forms a slanting, a V, or a W pattern.

6. The pipeline (1) according to one of the preceding claims, **characterized in that** the mixing element (3) has a uniform thickness and/or a homogeneous structure.

7. The pipeline (1) according to one of the preceding claims, **characterized in that** the band (B) is rolled up in reversed lay, preferably such that at least two layers of the band (B) arranged one on top of the other are rolled up together.

8. The pipeline (1) according to one of the preceding claims, **characterized in that** the band (B) in the rolled-up state forms individual layers and the individual layers have embossings (3.3) which are oriented differently and/or oppositely.

9. The pipeline (1) according to one of the preceding claims, **characterized in that** in the rolled-up state of the band (B)
- two open ends (E1, E2) of the band (B) are arranged on outer sides of the band (B), preferably staggered by 180° +/-40°, +/-30° or +/-20° from each other, or
- two open ends (E1, E2) of the band (B) are arranged preferably centrally inside the band (B).

10. The pipeline (1) according to one of the preceding claims, **characterized in that** the mixing element (3) fills up the entire pipeline cross section (D).

11. The pipeline (1) according to one of the preceding claims, **characterized in that** the mixing element (3) acts as a swirling device, so that swirling of the gas at wire sections of the wire structure ensures the thorough mixing of the gas and the homogenization of the inhomogeneous flow profile (S1).

12. The pipeline (1) according to one of the preceding claims, **characterized in that** a gas flow at the outlet (3.2) of the mixing elements (3) has a plurality of swirls and/or a gas flow at the outlet (3.2) of the mixing element (3) is more heavily swirled than at the inlet (3.1) of the mixing element (3) and **in that** a linear calming section (4) and/or at least one straightening device (5.1, 5.2) for reducing the swirls is formed downstream from the mixing element (3) in order to dampen the swirls created by the mixing element (3) .

13. The pipeline (1) according to one of the preceding claims, **characterized in that** a straightening device (5.2) for reducing of swirls is arranged in or directly in front of a gas inlet of the gas measuring device (2) .

14. The pipeline (1) according to one of the preceding claims, **characterized in that**
- wire sections of the wire mesh are arranged in random orientation and/or intersecting behind one another, so that preferably the gas is deflected several times during its flow through the mixing element (3), or
- wire sections of at least two wire weave layers are arranged intersecting behind one another, so that preferably the gas is deflected several times during its flow through the mixing element (3) .

15. The pipeline (1) according to one of the preceding claims, **characterized in that** the pipeline (1) upstream from the mixing element (3)
- has a perturbing element and the perturbing element results in the gas having an inhomogeneous flow profile (S1) across the pipeline cross section (D) upstream from the mixing element (3) or
- is curved so that the gas has an inhomogeneous flow profile (S1) across the pipeline cross section (D) upstream from the mixing element (3).

16. The pipeline (1) according to one of the preceding claims, **characterized in that** the mixing element (3), the calming section (4) and/or at least one straightening device (5.1, 5.2) is arranged in the pipeline (1) upstream from the gas measuring device (4).

17. The pipeline (1) according to one of the preceding claims, **characterized in that**
- the wire structure is formed from a metal or plastic material, especially refined steel, and/or
- the wire mesh is knitted from a single wire at least in sections.

18. A motor vehicle, preferably a utility vehicle, with a pipeline (1) according to one of the preceding claims.

## Revendications

1. Conduit tubulaire (1) destiné à amener un gaz à un moteur à combustion interne, ledit conduit tubulaire présentant une section transversale (D) qui forme un passage pour le gaz et comprenant un moyen de mesure de gaz (2) destiné à mesurer un débit massique de gaz, le conduit tubulaire (1) comprenant un élément de mélange (3) formé d'une structure en fil métallique en amont du moyen de mesure de gaz (2) et l'élément de mélange (3) servant à influer sur le gaz, de préférence à mélanger celui-ci intimement, pour homogénéiser un profil d'écoulement (S1) inhomogène présent en amont de l'élément de mélange (3), **caractérisé en ce que**, pour former l'élément de mélange (3), la structure en fil métallique comprend un ruban enroulé (B), formé d'un tricot de fil métallique ou d'un tissu de fil métallique, et/ou un tuyau en tricot de fil métallique est pressé à plat pour former un ruban (B) et le ruban (B) est enroulé pour former l'élément de mélange (3).

2. Conduit tubulaire (1) selon la revendication 1, **caractérisé en ce que** l'élément de mélange (3) homogénéise le profil d'écoulement inhomogène (S1) de manière à transformer celui-ci en un profil d'écoulement sensiblement homogène (S2) sur la section transversale de conduit tubulaire (D).

3. Conduit tubulaire (1) selon la revendication 1 ou 2, **caractérisé en ce que** la structure en fil métallique comprend au moins un tricot de fil métallique ou au moins un tissu de fil métallique.

4. Conduit tubulaire (1) selon l'une des revendications précédentes, **caractérisé en ce qu'**un gaufrage (3.3) est appliqué sur le ruban (B) et de préférence le gaufrage (3.3) est orienté obliquement et/ou non perpendiculairement par rapport au plan d'enroulement (RE) du ruban (B).

5. Conduit tubulaire (1) selon la revendication 4, **caractérisé en ce que** le gaufrage (3.3) est réalisé sous la forme d'une ondulation gaufrée et/ou forme un motif oblique en V ou en W.

6. Conduit tubulaire (1) selon l'une des revendications précédentes, **caractérisé en ce que** l'élément de mélange (3) a une densité uniforme et/ou une structure homogène.

7. Conduit tubulaire (1) selon l'une des revendications précédentes, **caractérisé en ce que** le ruban (B) est enroulé en couches croisées, de préférence de telle sorte qu'au moins deux couches superposées du ruban (B) soient enroulées ensemble.

8. Conduit tubulaire (1) selon l'une des revendications précédentes, **caractérisé en ce que** le ruban (B) forme, à l'état enroulé, des couches individuelles et **en ce que** les couches individuelles comportent des gaufrages (3.3) ayant des orientations différentes et/ou opposées.

9. Conduit tubulaire (1) selon l'une des revendications précédentes, **caractérisé en ce que**, lorsque le ruban (B) est à l'état enroulé,
- deux extrémités ouvertes (E1, E2) du ruban (B) sont disposées sur des côtés extérieurs du ruban (B), en étant de préférence décalées de 180° +/-40°, +/-30° ou +/-20° l'une par rapport à l'autre, ou
- deux extrémités ouvertes (E1, E2) du ruban (B) sont de préférence disposées centralement à l'intérieur du ruban (B).

10. Conduit tubulaire (1) selon l'une des revendications précédentes, **caractérisé en ce que** l'élément de mélange (3) remplit toute la section transversale de conduit tubulaire (D).

11. Conduit tubulaire (1) selon l'une des revendications précédentes, **caractérisé en ce que** l'élément de mélange (3) agit comme un moyen de turbulence de sorte que des turbulences du gaz au niveau de parties de fil métallique de la structure en fil métallique assurent le mélange intime du gaz et l'homogénéisation du profil d'écoulement inhomogène (S1) .

12. Conduit tubulaire (1) selon l'une des revendications précédentes, **caractérisé en ce qu'**un écoulement de gaz comporte une pluralité de tourbillons à la sortie (3.2) de l'élément de mélange (3) et/ou **en ce qu'**un écoulement de gaz est soumis à un plus forte tourbillonnement à la sortie (3.2) de l'élément de mélange (3) qu'à l'entrée (3.1) de l'élément de mélange (3) et une section de stabilisation linéaire (4) et/ou au moins un moyen redresseur (5.1, 5.2) est conçu pour réduire les tourbillons afin d'amortir les tourbillons générés par l'élément de mélange (3) en aval de l'élément de mélange (3).

13. Conduit tubulaire (1) selon l'une des revendications précédentes, **caractérisé en ce qu'**un moyen redresseur (5.2) destiné à réduire les tourbillons est disposé dans ou juste avant une entrée de gaz du moyen de mesure de gaz (2).

14. Conduit tubulaire (1) selon l'une des revendications précédentes, **caractérisé en ce que**
- des parties en fil métallique du tricot de fil métallique sont disposées de manière aléatoire et/ou de manière à se croiser les unes derrière les autres, de préférence de manière à dévier plusieurs fois le gaz lors de l'écoulement à travers l'élément de mélange (3), ou
- des parties en fil métallique d'au moins deux couches de tissu en fil métallique sont disposées de manière à se croiser les unes derrière les autres, de préférence de manière à dévier plusieurs fois le gaz lors de l'écoulement à travers l'élément de mélange (3) .

15. Conduit tubulaire (1) selon l'une des revendications précédentes, **caractérisé en ce que**, en amont de l'élément de mélange (3), le conduit tubulaire (1)
- comporte un moyen perturbateur, lequel moyen perturbateur confère au gaz, en amont de l'élément de mélange (3), un profil d'écoulement inhomogène (S1) sur la section transversale de conduit tubulaire (D) ou
- est incurvé de sorte que le gaz comporte, en amont de l'élément de mélange (3), un profil d'écoulement inhomogène (S1) sur la section transversale de conduit tubulaire (D).

16. Conduit tubulaire (1) selon l'une des revendications précédentes, **caractérisé en ce que** l'élément de mélange (3), la section de stabilisation (4) et/ou au moins un moyen redresseur (5.1, 5.2) sont disposés dans le conduit tubulaire (1) en amont du moyen de mesure de gaz (4).

17. Conduit tubulaire (1) selon l'une des revendications précédentes, **caractérisé en ce que**
- la structure en fil métallique est formée à partir d'un matériau métallique ou d'une matière plastique, en particulier d'un acier fin, et/ou
- le tricot de fil métallique est au moins partiellement tricoté à partir d'un seul fil métallique.

18. Véhicule automobile, de préférence véhicule utilitaire, équipé d'un conduit tubulaire (1) selon l'une des revendications précédentes.
